# EUROPEAN PATENT APPLICATION

(11) **EP 1 317 122 A2**
(43) Date of publication of application: **04.06.2003**
(21) Application number: 02025274.8
(22) Date of filing: 12.11.2002
(51) Int. Cl.: H04M 3/487

(54) **Information insertion during a phone call**

(30) Priority: 13.11.2001 JP 2001347830
(71) Applicant: NTT DoCoMo, Inc., Tokyo 100-6150 (JP)
(72) Inventor: Tosaki, Takashi, NTT DoCoMo, Inc., Int. Prop. Dpt., Chiyoda-ku, Tokyo 100-6150 (JP); Kawaguchi, Fumiko, c/o NTT DoCoMo, Inc., Chiyoda-ku, Tokyo 100-6150 (JP); Sugiyama, Takeshi, c/o NTT DoCoMo, Inc., Chiyoda-ku, Tokyo 100-6150 (JP); Kaiyama, Akira, NTT DoCoMo, Inc., Int. Prop. Dpt., Chiyoda-ku, Tokyo 100-6150 (JP); Yamamoto, Takanobu, c/o NTT DoCoMo, Inc., Chiyoda-ku, Tokyo 100-6150 (JP)
(74) Representative: GROSSE BOCKHORNI SCHUMACHER

(57) **Abstract**

An information insertion service providing system comprises a communication network owned by a communication carrier, providing a communication service, and interconnecting an originating instrument held by an originating user of the service, a receiving instrument held by a receiving user, the information storage device, and the information processing device owned by an information insertion demander; and for reducing the load on both an information insertion demander and a receiver, the communication network has an information management station configured to receive an information insertion request from the information processing device, settle the insert information, based on the information insertion request and user information of the originating side and the receiving side managed by the service control station, and acquire the insert information from the information storage device, and an information transferring device configured to insert the insert information into each of the originating and receiving instruments.

## Description

### BACKGROUND OF THE INVENTION

### Field of the Invention

The present invention relates to an information insertion service providing system, an information insertion method, a communication network, an information management apparatus, and a service control apparatus and, more particularly, to an information insertion service providing system comprising an information storage device storing insert information to be inserted, an information processing device owned by an information insertion demander and configured to output an information insertion request signal to request insertion of insert information, and a communication network owned by a communication carrier, providing a communication service, and interconnecting an originating communication instrument held by an originating user of the communication service, a receiving communication instrument held by a receiving user of the communication service, the information storage device, and the information processing device; an information insertion method associated with the insertion of the insert information in the information insertion service providing system; a communication network forming the information insertion service providing system; and an information management apparatus and a service control apparatus forming the communication network.

### Related Background Art

Among the conventional communication networks, there is an actual example of insertion of advertising information or the like before a call, for example, as serviced by AT&T in the United States, but it is mentioned that it was not always valued highly by users in that the call was not allowed unless the user listened through the contents to which the user was unwilling to listen. In general, in order for an information insertion demander to deliver information, the demander had to attract communication service users by its own means and deliver the information through the communication network on its own. The delivered information was delivered mainly singly, and there was no practical example of delivering information in combination in consideration of communication between users and user's attribute information (for example, in Japanese Patent Application "Laid-Open Gazette No.2001-186192").

For example, there are cases where the users receive the advertising information or the like on occasion during WEB searches or the like, but the advertising information or the like is never received during the call between users. On the occasion of the user's receiving the advertising information or the like as delivered, the user has to wait before completion of the reception, regardless of whether the advertising information or the like is useful, or regardless of whether it is necessary for the user. The communication between user's instruments (e.g., a call) is handled mainly independently of the reception of the advertising information or the like, and the reception of advertising information or the like might be done against user's intention, so as to inconvenience the user in certain cases.

In the conventional communication networks there was no cooperation between the communication carrier and the information insertion demander, as described above, and the method employed was one wherein the information insertion demander searched for delivery target users, selected users, and delivered the information thereto through the communication network on its own; therefore, a heavy load was placed on the information insertion demander. As for the users receiving the information, they had to wait before completion of the reception of the information, regardless of whether the information is useful or not. There is also a possibility that the information receiving act itself is inconvenient to the users if the reception of information occurs on unexpected occasions.

The present invention has been accomplished in order to solve the above problem and an object of the invention is to provide an information insertion service providing system, an information insertion method, a communication network, an information management apparatus, and a service control apparatus capable of reducing the load on both the information insertion demander and the information receiver by providing a scheme wherein the communication carrier honors a request for insertion of information from the information insertion demander and thereafter the entire processing of information insertion is carried out on the communication network side.

### SUMMARY OF THE INVENTION

In order to achieve the above object, an information insertion service providing system according to the present invention is an information insertion service providing system comprising an information storage device storing insert information to be inserted; an information processing device owned by an information insertion demander and configured to output an information insertion request signal to request insertion of said insert information; and a communication network owned by a communication carrier, providing a communication service, and interconnecting an originating communication instrument held by an originating user of the communication service, a receiving communication instrument held by a receiving user of the communication service, said information storage device, and said information processing device, wherein said communication network comprises: request receiving means for receiving an information insertion request sent from said information processing device or presented by said information insertion demander; settling means for settling insert information to be inserted, based on the information insertion request received; acquiring means for acquiring the insert information settled, from said information storage device; and inserting means for inserting the insert information acquired, into said originating communication instrument and said receiving communication instrument.

Namely, when the request receiving means provided in the communication network receives an information insertion request sent from the information processing device owned by the communication carrier or presented by the information insertion demander, the settling means settles the insert information to be inserted, based on the information insertion request, the acquiring means acquires the settled insert information from the information storage device, and the inserting means inserts the acquired insert information into the originating communication instrument and the receiving communication instrument. This can provide the scheme wherein the communication carrier honors the request for information insertion from the information insertion demander and thereafter the entire processing of information insertion is performed on the communication network side. For this reason, the load becomes lighter on the information insertion demander than in the conventional method wherein the information insertion demander selects the delivery target users and delivers the information thereto through the communication network on its own.

Preferably, the settling means is configured to settle the insert information, based on originating user information about the originating user and receiving user information about the receiving user, in addition to the information insertion request. The originating user information and the receiving user information herein includes both information presented by each user on an application form or the like at the time of a contract with the user and information about items agreed between the communication carrier and the user, and information additionally enrolled or changed according to a request from the user after the contract. For example, the information can include user's gender, age, home address, business address, occupation, taste, types of selected services, categories of desired contents, fare plan, and so on. By employing the configuration wherein the insert information is settled based on the originating user information and the receiving user information in this way, it becomes feasible to provide information desired by the user or information useful to the user, as the insert information according to the user's plan. User's convenience is also improved in terms of protection of personal information and in terms of no need for feeding personal information to each of information insertion demanders.

Preferably, the inserting means is configured to insert the insert information at a time set in a calling period of communication between the originating communication instrument and the receiving communication instrument, in a communication period, or at a time of an end of communication. This makes it feasible, for example, to provide a service of inserting the insert information (advertising information or the like) during an idle period on the originating side before answering of the receiving side. Namely, the information is inserted during communication between user's instruments, e.g., the information of advertisement or the like is inserted during a period in which the originating side awaits answering of the receiving side, which permits the originating user to view the information during the waiting period and effectively use the waiting time, thereby enabling achievement of a delivery method without inconvenience to the user.

More preferably, the inserting means may set the insertion time in the calling period of communication, in the communication period, or at the time of the end of communication, based on originating user information about the originating user and receiving user information about the receiving user, and insert the insert information at the set time. This makes it feasible to relieve the disadvantage that the information reception act itself inconveniences the user when the reception of information occurs during unexpected periods.

The present invention as described above can be applied to a variety of communication network forms and communication systems, and the insert information as an insert object can also be applied to a variety of data.

Namely, a form of the communication network according to the present invention may be a mobile communication network, an Integrated Services Digital Network, a communication network for Personal Handyphone System, or an Internet network.

The insert information may be voice information, non-voice information, or integrated information of voice information and non-voice information.

A communication system in the communication network may be one of a circuit switching system, a packet switching system, and an IP (Internet Protocol) communication system, or two or more thereof used in combination.

Furthermore, when the communication system in the communication network is the above-stated two or more used in combination, a communication system used in the communication service and a communication system used in insertion of the insert information may be independently set according to a type of the insert information. For example, a method employed can be one wherein when the insert information is non-voice information, a call is implemented by the circuit switching system and the insertion of the non-voice information is performed by the packet switching system.

It is a matter of course that positive utilization of the information insertion service can be further promoted by combinational use of a preferential treatment in billing for the user accepting the delivery of insert information, for example, by making free the communication fee required for the insertion of information, giving a discount to the user, adding some charge to a prepaid deposit, and so on. The communication carrier can have a new income source by earning a commission from the information insertion demander.

Preferably, the foregoing communication network is configured to further comprise: monitoring means for monitoring whether an insertion process by the inserting means is carried out normally; abnormal event control means for performing such control as to execute a predetermined abnormal event process when the insertion process is not carried out normally; achievement storage means for storing achievement information about insertion process conditions obtained as a result of the monitoring; and notifying means for notifying the information insertion demander of the achievement information stored or of billing information determined based on the achievement information.

Namely, the control is performed in such a manner that the monitoring means monitors whether the insertion process by the inserting means is carried out normally and that when the insertion process is not carried out normally, the abnormal event control means executes the predetermined abnormal event process (for example, notification of occurrence of abnormality to the information insertion demander at that time, a discount process in billing, or the like). The achievement storage means stores the achievement information about the insertion process conditions obtained as a result of the monitoring, and the notifying means notifies the information insertion demander of the stored achievement information or the billing information determined based on the achievement information. This configuration can achieve smooth processing in the event of failure in normal execution of the insertion process, and permits the information insertion demander to keep track of the insertion process conditions and check the actual information insertion effect.

The present invention can not be applied only to circumstances where the information insertion demander is different from the communication carrier, but can also be applied to circumstances where they are identical with each other.

The aspect of the invention associated with the information insertion service providing system described above can also be described as aspects of the invention associated with an information insertion method and a communication network as described below. These aspects are substantially based on the same technical concept and provide like operation and effect.

Namely, an information insertion method according to the present invention is an information insertion method in an information insertion service providing system comprising an information storage device storing insert information to be inserted; an information processing device owned by an information insertion demander and configured to output an information insertion request signal to request insertion of said insert information; and a communication network owned by a communication carrier, providing a communication service, and interconnecting an originating communication instrument held by an originating user of the communication service, a receiving communication instrument held by a receiving user of the communication service, said information storage device, and said information processing device, said information insertion method being associated with insertion of the insert information, and comprising: a request receiving step wherein said communication network receives an information insertion request sent from said information processing device or presented by said information insertion demander; a settling step wherein said communication network settles insert information to be inserted, based on the information insertion request received; an acquiring step wherein said communication network acquires the insert information settled, from said information storage device; and an inserting step wherein said communication network inserts the insert information acquired, into said originating communication instrument and said receiving communication instrument.

In a preferred form of this configuration, in the settling step the communication network settles the insert information, based on originating user information about the originating user and receiving user information about the receiving user, in addition to the information insertion request. In another preferred form, in the inserting step the communication network inserts the insert information at a time set in a calling period of communication between the originating communication instrument and the receiving communication instrument, in a communication period, or at a time of an end of communication. In a further preferred form, in the inserting step the communication network sets the insertion time in the calling period of communication, in the communication period, or at the time of the end of communication, based on originating user information about the originating user and receiving user information about the receiving user, and inserts the insert information at the set time.

In the aspect of the invention associated with the information insertion method, a form of the communication network may be a mobile communication network, an Integrated Services Digital Network, a communication network for Personal Handyphone System, or an Internet network. The insert information may be voice information, non-voice information, or integrated information of voice information and non-voice information. Furthermore, a communication system in the communication network may be one of a circuit switching system, a packet switching system, and an IP communication system, or two or more thereof used in combination. When the communication system in the communication network is the above-stated two or more used in combination, a communication system used in the communication service and a communication system used in insertion of the insert information may be independently set according to a type of the insert information. For example, a method employed can be one wherein when the insert information is non-voice information, a call is implemented by the circuit switching system and the insertion of the non-voice information is performed by the packet switching system.

It is a matter of course that positive utilization of the information insertion service can be further promoted by combinational use of a preferential treatment in billing for the user accepting the delivery of insert information, for example, by making free the communication fee required for the insertion of information, giving a discount to the user, adding some charge to a prepaid deposit, and so on. The communication carrier can have a new income source by earning a commission from the information insertion demander.

In the aspect of the invention associated with the information insertion method, preferably, the information insertion method is configured to further comprise a monitoring step wherein the communication network monitors whether an insertion process in the inserting step is carried out normally; an abnormal event control step wherein when the insertion process is not carried out normally, the communication network performs such control as to execute a predetermined abnormal event process; an achievement storing step wherein the communication network stores achievement information about insertion process conditions obtained as a result of the monitoring; and a notifying step wherein the communication network notifies the information insertion demander of the achievement information stored or of billing information determined based on the achievement information.

Namely, the control is performed in such a manner that in the monitoring step the communication network monitors whether the insertion process is carried out normally and that when the insertion process is not carried out normally, the communication network executes the predetermined abnormal event process (e.g., the notification of occurrence of abnormality to the information insertion demander at that time, the discount process in billing, or the like) in the abnormal event control step. In the achievement storing step, the communication network stores the achievement information about the insertion process conditions obtained as a result of the monitoring and in the notifying step the communication network notifies the information insertion demander of the stored achievement information or the billing information determined based on the achievement information. This method can implement smooth processing in the event of failure in normal execution of the insertion process, and permits the information insertion demander to keep track of the insertion process conditions and check the actual information insertion effect.

The aspect of the invention associated with this information insertion method can not be applied only to circumstances where the information insertion demander is different from the communication carrier, but can also be applied to circumstances where they are identical with each other.

The present invention can be described as an aspect of the invention associated with the communication network, which follows. Namely, a communication network according to the present invention is a communication network constituting an information insertion service providing system together with an information storage device storing insert information to be inserted, and an information processing device owned by an information insertion demander and configured to output an information insertion request signal to request insertion of said insert information, said communication network being owned by a communication carrier, providing a communication service, and interconnecting an originating communication instrument held by an originating user of the communication service, a receiving communication instrument held by a receiving user of the communication service, said information storage device, and said information processing device, said communication network comprising: request receiving means for receiving an information insertion request sent from said information processing device or presented by said information insertion demander; settling means for settling insert information to be inserted, based on the information insertion request received; acquiring means for acquiring the insert information settled, from said information storage device; and inserting means for inserting the insert information acquired, into said originating communication instrument and said receiving communication instrument.

In this configuration, preferably, the settling means is configured to settle the insert information, based on originating user information about the originating user and receiving user information about the receiving user, in addition to the information insertion request. Preferably, the inserting means is configured to insert the insert information at a time set in a calling period of communication between the originating communication instrument and the receiving communication instrument, in a communication period, or at a time of an end of communication. Furthermore, preferably, the inserting means is configured to set the insertion time in the calling period of communication, in the communication period, or at the time of the end of communication, based on originating user information about the originating user and receiving user information about the receiving user, and insert the insert information at the set time.

Preferably, the above communication network is configured to further comprise monitoring means for monitoring whether an insertion process by the inserting means is carried out normally; abnormal event control means for performing such control as to execute a predetermined abnormal event process when the insertion process is not carried out normally; achievement storage means for storing achievement information about insertion process conditions obtained as a result of the monitoring; and notifying means for notifying the information insertion demander of the achievement information stored or of billing information determined based on the achievement information.

The aspect of the invention associated with this communication network can not be applied only to circumstances where the information insertion demander is different from the communication carrier, but can also be applied to circumstances where they are identical with each other.

The present invention can also be described as aspects of the invention associated with information management apparatus and service control apparatus forming the communication network, which follow.

Namely, an information management apparatus according to the present invention is an information management apparatus provided in a communication network interconnecting an information storage device storing insert information to be inserted, an information processing device configured to output an information insertion request signal to request insertion of the insert information, an originating communication instrument held by an originating user of a communication service, and a receiving communication instrument held by a receiving user of the communication service, said information management apparatus being configured to control insertion of said insert information, and comprising: request receiving means for receiving an information insertion request sent from said information processing device or presented by said information insertion demander; settling means for settling insert information to be inserted, based on the information insertion request received; acquiring means for acquiring the insert information settled, from said information storage device; and inserting means for inserting the insert information acquired, into said originating communication instrument and said receiving communication instrument.

The information management apparatus according to the present invention is characterized in that the settling means settles the insert information, based on originating user information about the originating user and receiving user information about the receiving user from a service control apparatus provided in the communication network, in addition to the information insertion request.

The information management apparatus according to the present invention is characterized by further comprising monitoring means for monitoring whether an insertion process by the inserting means is carried out normally; abnormal event instructing means for instructing a service control apparatus provided in the communication network, to execute a predetermined abnormal event billing process when the insertion process is not carried out normally; achievement storage means for storing achievement information about insertion process conditions obtained as a result of the monitoring; and notifying means for notifying the information insertion demander of the achievement information stored or of billing information determined based on the achievement information.

A service control apparatus according to the present invention is a service control apparatus provided in a communication network interconnecting an information storage device storing insert information to be inserted, an information processing device configured to output an information insertion request signal to request insertion of said insert information, an originating communication instrument held by an originating user of a communication service, and a receiving communication instrument held by a receiving user of the communication service, said service control apparatus being configured to manage originating user information about the originating user and receiving user information about the receiving user, and comprising: user information storing means storing the originating user information and the receiving user information; and user information providing means configured to acquire originating user information and receiving user information corresponding to identification information of an originating user and identification information of a receiving user notified of, from said user information storing means and provide the originating user information and receiving user information acquired, to an information management apparatus for controlling insertion of said insert information.

The service control apparatus according to the present invention is characterized by further comprising billing control means for, when receiving an execution command of a predetermined abnormal event billing process from the information management apparatus, performing the predetermined abnormal event billing process according to the execution command.

### BRIEF DESCRIPTION OF THE DRAWINGS

Fig. 1 is a whole configuration diagram of an information insertion service providing system according to an embodiment of the invention.

Fig. 2 is a diagram showing the procedure of implementing the information insertion.

Fig. 3 is a diagram for explaining the structure and operation of an information management station.

Fig. 4 is a diagram for explaining the structure and operation of a service control station.

Fig. 5 is a block diagram showing the functional structure of an information management station.

### DESCRIPTION OF THE PREFERRED EMBODIMENTS

An embodiment of the present invention will be described below in detail on the basis of the drawings.

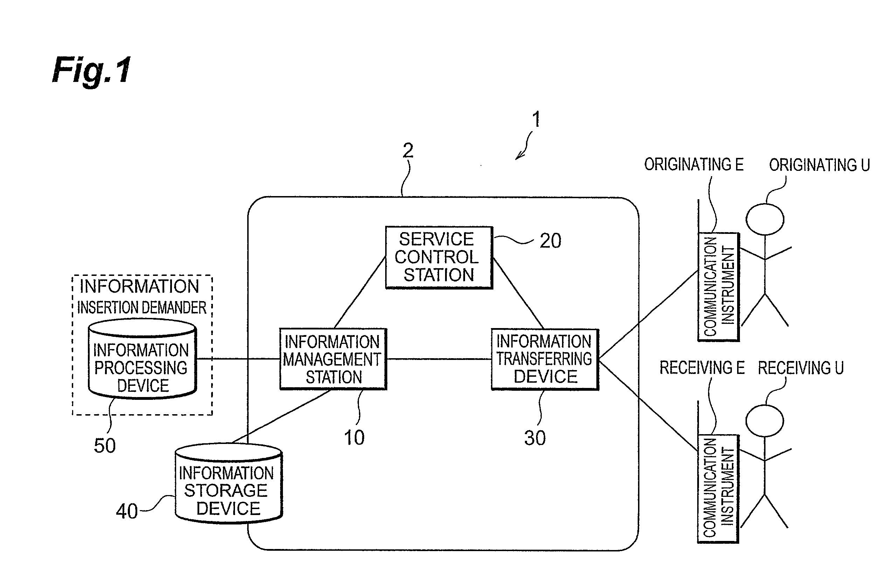

Fig. 1 is an illustration showing the whole configuration of information insertion service providing system 1 to which the present invention is applied. The form of the communication network in the present embodiment is assumed to be a mobile communication network as an example. It is also assumed that the insert information in the present embodiment is commercial information of advertisement or the like and the type of communication is voice calls. The present embodiment is assumed to provide a service of inserting the advertising information into originating and receiving communication instruments before a start of communication, and terminating the display of the advertising information and starting a call upon answering of the receiving side. Among the symbols in Fig. 1, originating U denotes a user of the communication network 2 and originating user who originates communication. Receiving U designates a user of the communication network 2 and receiving user. In addition, originating E represents a communication instrument used by originating U, receiving E a communication instrument used by receiving U, and these communication instruments can be, for example, mobile telephones, mobile terminals, and so on.

As shown in Fig. 1, the information insertion service providing system 1 is comprised of an information processing device 50 owned by an information insertion demander; an information management station 10, a service control station 20, and an information transferring device 30 installed in the communication network 2 owned by a communication carrier; an information storage device 40 owned by the communication carrier; and a plurality of communication instruments (originating E and receiving E). The information management station 10 is linked through an information transmitting means such as a line or the like to the information processing device 50. Originating E and receiving E are connected to the information transferring device 30, the information transferring device 30 to the information management station 10 and to the service control station 20, the service control station 20 to the information management station 10, and the information management station 10 to the information storage device 40, each through an information transmitting means.

Fig. 1 shows only one set of information processing device 50 owned by the information insertion demander and information storage device 40, but there exist plural sets of those devices in general. The information storage device 40 can be installed at any place inside or outside the communication network 2. When the information storage device 40 is installed inside the communication network 2, insert information is also transmitted to the information management station 10 together with an information insertion request from the information processing device 50 and is stored in the information storage device 40 in the network. When the information storage device 40 is installed outside the communication network 2, the information management station 10 is notified of the location of the information storage device 40 and how to acquire the insert information (e.g., transmission of a path identifier, an acquisition permission ID, etc. for access to the information storage device 40) on the occasion of sending the information insertion request from the information processing device 50. The information storage device 40 may be integrated with the information processing device 50 and processing in that case will be handled in much the same manner as below.

In the present embodiment, it is assumed that the information insertion demander sends an information insertion request signal from its own information processing device 50 to the communication network 2. If the case where the information insertion demander submits the information insertion request through such a means as a call, papers, or the like, the information insertion request signal is generated in the network and the insert information corresponding to the information insertion request signal is stored in the information storage device 40 in the network.

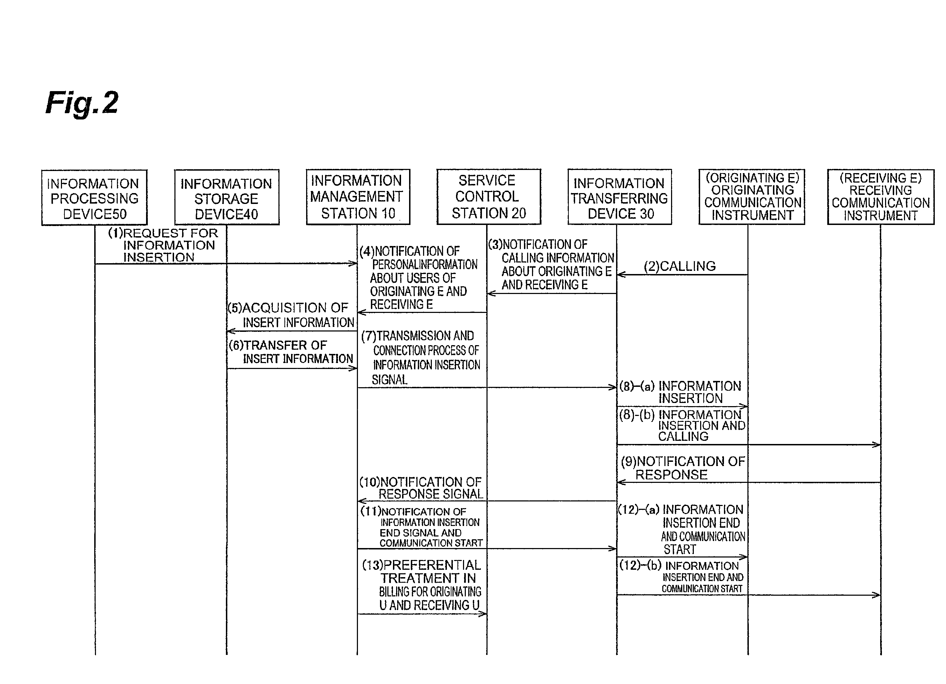

Fig. 2 shows the procedure of implementing the information insertion in communication. The general outline of the information insertion method in communication according to the present embodiment is as follows.

As shown in Fig. 2, when the information management station 10 accepts the information insertion request from the information processing device 50 (step (1)), the information management station 10 factors out an attribute of information to be inserted (insert information) and establishes a communication means with the information storage device 40 storing the insert information.

When originating U as a user of the communication service makes a call to receiving U, originating E held by originating U calls out the information transferring device 30 (step (2)). The information transferring device 30 notifies the service control station 20 of call numbers of originating E and receiving E on the basis of calling information obtained at step (2) (step (3)). Then the service control station 20 notifies the information management station 10 of personal information (e.g., including position information) about each of originating U and receiving U from the call numbers of the originating side and the receiving side and information obtained by service contract (step (4)).

The information management station 10 selects information (insert information) to be delivered to the originating side and the receiving side, based on the information about the originating side and the receiving side, and requests the information storage device 40 to transfer the insert information thus selected, to the information management station 10 (step (5)). In response thereto, the information storage device 40 transfers the insert information requested by the information management station 10 (step (6)).

The information management station 10 transfers the insert information obtained at step (6), to the information transferring device 30 (step (7)), and then the information transferring device 30 transfers the insert information to the originating communication instrument (originating E) and to the receiving communication instrument (receiving E). Originating E and receiving E provide output of the insert information to originating U and to receiving U, respectively (e.g., display of inserted image information and/or output of voice information) . Here the information transferring device 30 provides a calling notification at the same time as the delivery of the insert information, to the receiving communication instrument of receiving E (steps (8)-(a) and (8)-(b)).

When receiving E answers, receiving E sends an answer signal to the information transferring device 30 (step (9)). The information transferring device 30 notifies the information management station 10 of the answer signal of the receiving side (step (10)). The information management station 10 sends an information insertion end signal to the information transferring device 30 (step (11)). The information transferring device 30 transfers an information insertion end signal to originating E and to receiving E to initiate a call (step (12)-(a) and (12)-(b)).

Then the information management station 10 instructs the service control station 20 to handle preferential treatments in billing, e.g., a discount of communication fee, addition of free communication charge, addition to a prepaid deposit, an operation of making free the communication fee for the information insertion, and so on for originating U and receiving U (step (13)).

Although the above embodiment is assumed to perform the information insertion before the start of communication (during the calling period), the configuration can be readily modified so as to perform the information insertion during a call, by changing the timing of transferring the information insertion signal at step (7) and at step (8) and the timing of transferring the information insertion end signal to the communication instruments (originating E and receiving E) at steps (11) and (12). It is also possible to issue an information insertion signal after the end of the call and perform the information insertion after the end of the call, by modifying the configuration so that the information transferring device 30, receiving a call end signal issued from the communication instrument at the time of the end of the call, notifies the information management station 10 of the end.

It is also feasible to provide an operation of inserting information during calling for communication, continuously inserting the information for ten seconds more after an answer of the receiving side, and thereafter starting the communication. It is also feasible to carry out the information insertion only on the originating side, by transferring the information insertion signal only to the originating side, or to carry out the information insertion only on the receiving side, by transferring the information insertion signal only to the receiving side.

It is also conceivable that originating U desires to accept more insert information than one, and this situation can be handled by such an operation that originating E issues a signal to request additional transmission of insert information, to the communication network, the information transferring device 30 transfers the signal to the information management station 10, the information management station 10 acquires insert information to be added, from the information storage device 40, and thereafter the additional insert information is transferred to originating E. It is, however, necessary to adopt such control that a preferential treatment in billing upon the addition of insert information is better than the normal preferential treatments. Then, the information management station 10 records the addition of the insert information and requests the service control station 20 to increase the preferential rate in billing at step (13) in Fig. 2. In the case where the insert information to be added is related to the insert information first having been transferred to originating E and where originating U desires to accept the insert information to be added, as related information, it is feasible to provide a solution by a configuration wherein originating U is provided with a means for designating the insert information, originating E issues a request signal into the communication network, and the information management station 10 acquires the designated information from the information storage device 40 and sends an insertion request signal.

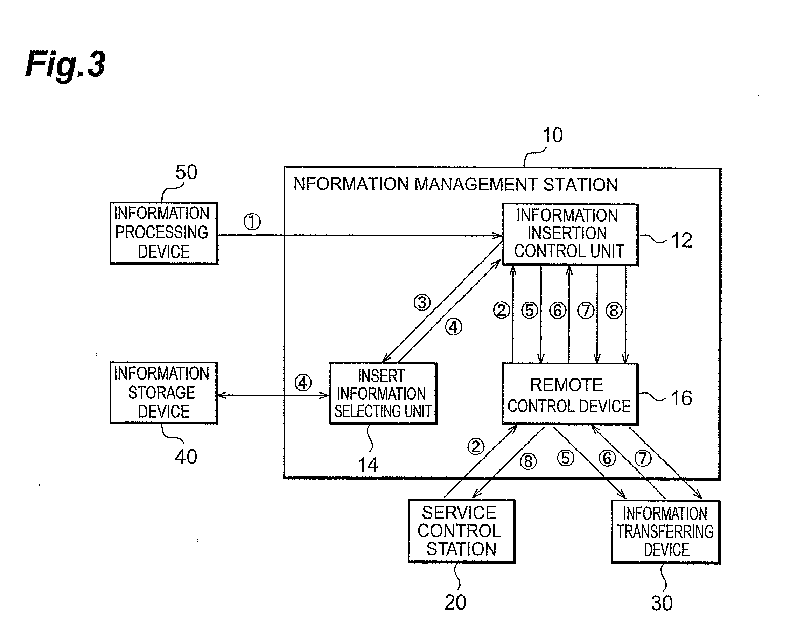

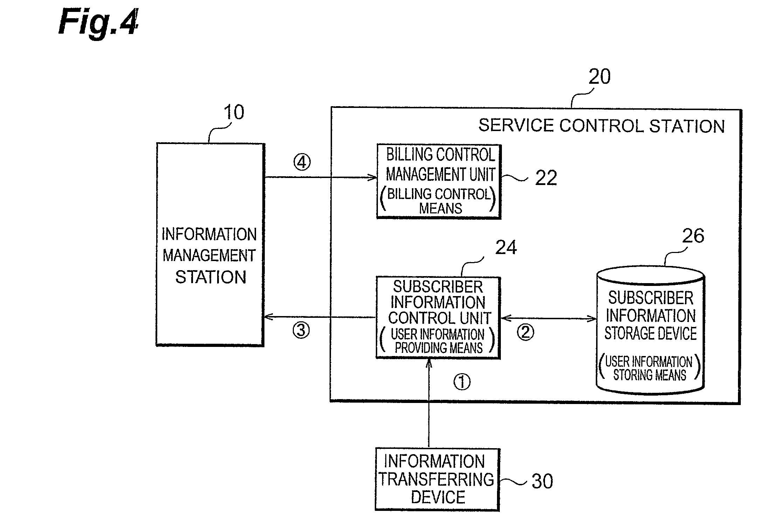

The following will describe the operations of the information management station 10 and the service control station 20 in the information insertion method during communication, which are the features of the present invention, in order with reference to Fig. 3 and Fig. 4.

The internal structure and operation in the information management station 10 shown in Fig. 3 will be described first. The information management station 10 is comprised of a remote control device 16, an insert information selecting unit 14, and an information insertion control unit 12, and the information insertion control unit 12 has control over the remote control device 16 and the insert information selecting unit 14. The remote control device 16 among these is a unit of performing total control for remote control over each device in the communication network 2, the service control station 20 and the information transferring device 30, and with necessity for inquiry to each device, the inquiry is made through the remote control device 16. The insert information selecting unit 14 has a function of selecting insert information to be inserted into originating E and receiving E owned by originating U and receiving U, respectively, based on the personal information and service contract information about originating U and receiving U of communication service users, notified of by the service control station 20.

The information insertion control unit 12 is notified of the information insertion request signal dispatched from the information processing device 50 held by the information insertion demander. Alternatively, it is notified of an information insertion request signal into which the communication carrier converts an information insertion request given through a written notice, a telephone call, or the like by the information insertion demander, in the network. The information insertion control unit 12 also has a function of issuing an information insertion signal, an information insertion end signal, and a start command signal for communication between users, to the information transferring device 30.

The following will detail the operation based on cooperation of the components of the information management station 10 shown in Fig. 3, with the external devices. The relation with the operation steps shown in Fig. 2 will also be given.
(1) The information insertion control unit 12 receives an information insertion request signal from the information processing device 50 (corresponding to step (1) of Fig. 2).
(2) The remote control device 16 receives a notification of personal information and service contract information of originating U and receiving U from the service control station 20, based on the calling information from originating E, and notifies the information insertion control unit 12 of the information (corresponding to step (4) of Fig. 2).
(3) The information insertion control unit 12 instructs the insert information selecting unit 14 to select the insert information to be inserted, based on the personal information and service contract information of originating U and receiving U.
(4) The insert information selecting unit 14 acquires the insert information from the information storage device 40 storing the selected insert information, and transfers it to the information insertion control unit 12 (corresponding to step (5) of Fig. 2).
(5) The information insertion control unit 12 sends an information insertion signal for inserting the insert information into each of originating E and receiving E, to instruct the information transferring device 30 to start a calling process to receiving E, and the information transferring device 30 performs the process instructed by the information insertion control unit 12, for each communication instrument (corresponding to step (7) of Fig. 2).
(6) A response notification from the information transferring device 30, receiving a response signal from receiving E, is sent through the remote control device 16 to the information insertion control unit 12 (corresponding to step (10) of Fig. 2).
(7) The information insertion control unit 12 sends a command through the remote control device 16 to the information transferring device 30 to instruct it to send an information insertion end signal to originating E and receiving E to start communication (corresponding to step (11) of Fig. 2).
(8) The information insertion control unit 12 sends a command through the remote control device 16 to the service control station 20 to instruct it to perform the billing process over originating U and receiving U (corresponding to step (13) of Fig. 2).

Among these, the above operation (1) is based on the assumption that the information insertion request signal is issued from the information processing device 50, and the operation will be modified in the case of a request through papers or a telephone call or the like, in such a manner that the request is converted into an information insertion request signal in the network and the information insertion request signal is sent to the information insertion control unit 12.

The above operation is based on the assumption that the information is inserted before the start of communication, but the information insertion process can also be carried out during communication or after completion of communication by modifying the above operations (5)-(7) so that the information insertion control unit 12 sets the times of sending the information insertion request signal and the information insertion end signal in a communication period or after the end of communication.

The internal structure and operation in the service control station 20 will be described below with reference to Fig. 4. The service control station 20 is comprised of a subscriber information control unit 24, a subscriber information storage device 26, and a billing control management unit 22, as shown in Fig. 4. The subscriber information storage device 26 stores the personal information about communication service users and information which the users submitted to the communication carrier, based on service contracts. The subscriber information control unit 24 is notified of identification numbers (IDs) of originating E and receiving E based on calling information, by the information transferring device 30. The subscriber information control unit 24 acquires the personal information and service contract information of originating U and receiving U possessing the communication instruments, based on those IDs, and notifies the information management station 10 of the information. The billing control management unit 22 has a function of performing a billing process on utilization of communication by the communication service users. The billing control management unit 22 corresponds to the billing control means according to the present invention, the subscriber information control unit 24 to the user information providing means, and the subscriber information storage device 26 to the user information storing means, respectively.

Taking the above into consideration, the operation based on cooperation of the components of the service control station 20 shown in Fig. 4, with the external devices will be described below in detail. The relation with the operation steps shown in Fig. 2 will also be provided.
(1) The information transferring device 30 notifies the subscriber information control unit 24 of IDs of originating E and receiving E (corresponding to step (3) of Fig. 2).
(2) The subscriber information control unit 24 acquires the personal information and service contract information of originating U and receiving U having their respective communication instruments, based on the IDs of originating E and receiving E in the operation (1), from the subscriber information storage device 26.
(3) The subscriber information control unit 24 transfers the personal information of originating U and receiving U acquired by the operation (2), to the information management station 10 (corresponding to step (4) of Fig. 2).
(4) The billing control management unit 22 handles a preferential treatment in billing for utilization of the information insertion service over originating U and receiving U, requested by the information management station 10 (corresponding to step (13) of Fig. 2).

According to the present embodiment as described above, the information insertion demander requests the communication carrier to perform the information insertion and thereby commissions the communication carrier to handle the process of information insertion. Since the information is not delivered singly but is inserted during communication between users and since the preferential treatment in billing is given, a distinction can be made from unsolicited advertisement delivery like spammail and it becomes easier for the communication users to accept the insert information. It is thus expected to achieve the effect higher than the conventional information delivery.

On the other hand, the communication carrier can earn a commission from the information insertion demander, so as to gain a new income source. The communication users can expect decrease of communication fees by this service. As described above, the three parties, the information insertion demander, the communication carrier, and the communication service users, can enjoy their respective notable advantages by the service based on the present invention.

The above embodiment described the case where the information insertion process was completed normally, but it can also be adapted to the case where connection is interrupted between originating E and the communication network in the middle of executing the information insertion process in response to the insertion request signal from the information management station 10 and where the information insertion process ends up with incomplete operation, by carrying out a predetermined abnormal event billing process, e.g., by setting the discount rate lower than the normal discount while handling the treatment in billing through cooperation between the service control station 20 and the information management station 10.

It is also desirable to employ a configuration wherein an achievement storage device for storing achievement information about processing conditions of the information insertion process is provided in the communication network and wherein the information insertion demander is notified in predetermined timing, e.g., at the end of each month or on appropriate occasions, of the achievement information stored in the achievement storage device or billing information determined based on the achievement information. This configuration can achieve smooth processing in the case where the insertion process is not carried out normally, and permits the information insertion demander to keep track of the insertion process conditions and check the actual information insertion effect.

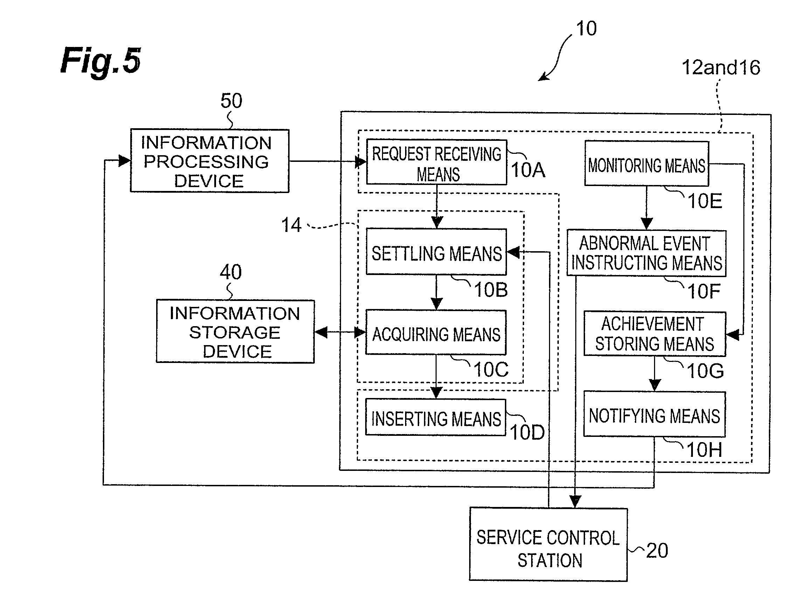

The above configuration is substantiated, for example, by employing the configuration shown in Fig. 5, as the functional configuration of the information management station 10. This configuration of Fig. 5 will be described below. The information management station 10 is comprised of a request receiving means 10A for receiving an information insertion request sent from the information processing device 50 or presented by the information insertion demander; a settling means 10B for settling the insert information to be inserted, based on the received information insertion request, originating user information, and receiving user information; an acquiring means 10C for acquiring the settled insert information from the information storage device 40; an inserting means 10D for inserting the acquired insert information into the originating communication instrument and the receiving communication instrument; a monitoring means 10E for monitoring whether the insertion process is carried out normally; an abnormal event instructing means 10F for instructing the service control station 20 to execute a predetermined abnormal event billing process when the insertion process is not carried out normally; an achievement storing means 10G (corresponding to the aforementioned achievement storage device) for storing the achievement information about the insertion process conditions obtained as a result of the monitoring; and a notifying means 10H for notifying the information insertion requester side (e.g., the information processing device 50) of the stored achievement information or billing information determined based on the achievement information.

Here the settling means 10B and the acquiring means 10C are equivalent to the functions of the insert information selecting unit 14, and the request receiving means 10A, inserting means 10D, monitoring means 10E, abnormal event instructing means 10F, achievement storing means 10G, and notifying means 10H each are equivalent to the functions of the information insertion control unit 12 and the remote control device 16. The service control station 20 can be configured to perform the predetermined abnormal event billing process according to an execution command when the billing control management unit 22 receives the execution command to execute the predetermined abnormal event billing process from the information management station 10.

Incidentally, in the above embodiment, the insert information to be inserted can be one of three types of forms, voice information, non-voice information, and mixed information of these. The voice information can be a sound file such as a voice file, an MIDI file, an MP3 file, or the like; the non-voice information can be characters, an image, a movie, a program, or the like; the mixed information can be an image with voice, a movie with voice, a text with voice, a program with voice, or the like; the information can be any information selected from the foregoing.

It is also conceivable as to the communication network and the communication system between the communication network and communication equipment that only the circuit switching system is supported, that only the packet communicating system is supported, that only the IP communication system is supported, and that two or more of these are supported. It is noted herein that the communication system used in calls can be identical with the communication system for transmission of insert information or that they may be different communication systems. For example, in the case of the communication network and communication equipment supporting the both communication systems of the circuit switching system and the packet switching system, where the information to be inserted is non-voice information, it is possible to employ a method of making calls by the circuit switching system and implementing the insertion of the non-voice information by the packet switching system.

The above example was configured so that the information management station 10 performed the calling control for insertion of information, but it can also be contemplated to employ an embodiment in which the service control station 20 performs the calling control instead of the information management station 10. In this embodiment, the service control station 20 performs the information insertion process after the processing up to step (6) in Fig. 2, instead of the information management station 10.

When the service control station 20 having the billing process function performs the calling control, it becomes feasible to flexibly adapt to the billing process in the case where communication is interrupted before completion of the information insertion process or the billing process in the case where the insert information is added. The process can also be handled through cooperation between the service control station and the information management station, as described previously, in the embodiment wherein the information management station performs the calling control.

It is noted that the above embodiment is just an example of embodiments of the present invention and the present invention is by no means intended to be limited to it.

For example, the communication network according to the present invention can also be applied to the Integrated Services Digital Network (ISDN) or a communication network for Personal Handyphone System (PHS). When the communication network is applied to the PHS network, it is feasible to realize a system capable of providing the information insertion service by much the same system as in the above embodiment of the mobile communication network. However, when the communication network is applied to the ISDN network, there is a high possibility that each communication equipment is shared by a family rather than owned by an individual, different from the mobile communication network and PHS network, and it is thus necessary to give consideration to the fact that the personal information and service contract information for selecting the insert information is greatly different from that in the case of the mobile communication network and PHS network.

The present invention can also be applied to the case where the communication network is Internet and calls are implemented by Voice over IP (hereinafter denoted by VoIP) technology. In this case, when a protocol for session management (Session Initiation Protocol (SIP) [IETF], H.323 [ITU-T], etc.) is used, the information can be inserted at any time before the start of communication, during communication, and after the end of communication. The insert information to be inserted in this example may be either the voice information such as sound, music, or the like, or the non-voice information such as an image, a movie, a text, or the like, or these both can be inserted simultaneously. Particularly, in the case where a personal computer (PC hereinafter) is used as communication equipment, the insert information can be utilized in a variety of forms, because PC can generally handle the larger volume of various information than the communication equipment used in the mobile communication network, the ISDN network, and the PHS network.

As detailed above, the present invention successfully provided the scheme wherein the communication carrier accepted the request for information insertion from the information insertion demander and thereafter performed all the processing of information insertion on the communication network side. Therefore, the load can be reduced on the information insertion demander, as compared with the conventional system wherein the information insertion demander selects delivery target users and delivers the information thereto through the communication network on its own.

Since the insert information is settled based on the originating user information and the receiving user information, it becomes feasible to provide as the insert information the information desired by the user or information useful to the user, according to a user's plan. Improvement is also made in user's convenience, in terms of protection of personal information and from the point that the personal information does not have to be fed to each of information insertion demanders.

The insert information can be inserted at any time in the calling period of communication between the originating communication instrument and the receiving communication instrument, in the communication period, or at the time of the end of communication; for example, when the information is inserted during communication between user's instruments, or when the information of advertisement or the like is inserted during a period in which the originating side awaits an answer of the receiving side, for example, the user can view the information during the waiting period and effectively use the waiting time. This realizes a delivery method without user's inconvenience.

More preferably, the inserting means may set the insertion time in the calling period of the communication, in the communication period, or at the time of the end of communication, based on the originating user information about the originating user and the receiving user information about the receiving user, and insert the insert information at the set time. This can relieve the disadvantage that the information receiving act itself inconveniences the user when the user receives the information during unexpected periods.

## Claims

1. An information insertion service providing system comprising an information storage device storing insert information to be inserted; an information processing device owned by an information insertion demander and configured to output an information insertion request signal to request insertion of said insert information; and a communication network owned by a communication carrier, providing a communication service, and interconnecting an originating communication instrument held by an originating user of the communication service, a receiving communication instrument held by a receiving user of the communication service, said information storage device, and said information processing device,
wherein said communication network comprises:
request receiving means for receiving an information insertion request sent from said information processing device or presented by said information insertion demander;
settling means for settling insert information to be inserted, based on the information insertion request received;
acquiring means for acquiring the insert information settled, from said information storage device; and
inserting means for inserting the insert information acquired, into said originating communication instrument and said receiving communication instrument.

2. The information insertion service providing system according to Claim 1, wherein said settling means settles said insert information, based on originating user information about the originating user and receiving user information about the receiving user, in addition to said information insertion request.

3. The information insertion service providing system according to Claim 1, wherein said inserting means inserts the insert information at a time set in a calling period of communication between the originating communication instrument and the receiving communication instrument, in a communication period, or at a time of an end of communication.

4. The information insertion service providing system according to Claim 3, wherein said inserting means sets the insertion time in the calling period of communication, in the communication period, or at the time of the end of communication, based on originating user information about the originating user and receiving user information about the receiving user, and inserts the insert information at the set time.

5. The information insertion service providing system according to Claim 1, wherein a form of said communication network is a mobile communication network, an Integrated Services Digital Network, a communication network for Personal Handyphone System, or an Internet network.

6. The information insertion service providing system according to Claim 1, wherein said insert information is voice information, non-voice information, or integrated information of voice information and non-voice information.

7. The information insertion service providing system according to Claim 1, wherein a communication system in said communication network is one of a circuit switching system, a packet switching system, and an IP communication system, or two or more thereof used in combination.

8. The information insertion service providing system according to Claim 7, wherein when the communication system in said communication network is said two or more used in combination, a communication system used in said communication service and a communication system used in insertion of said insert information are independently set according to a type of said insert information.

9. The information insertion service providing system according to Claim 1, wherein said communication network further comprises:
monitoring means for monitoring whether an insertion process by said inserting means is carried out normally;
abnormal event control means for performing such control as to execute a predetermined abnormal event process when said insertion process is not carried out normally;
achievement storage means for storing achievement information about insertion process conditions obtained as a result of the monitoring; and
notifying means for notifying said information insertion demander of the achievement information stored or of billing information determined based on the achievement information.

10. The information insertion service providing system according to Claim 1, wherein said information insertion demander is identical with said communication carrier.

11. An information insertion method in an information insertion service providing system comprising an information storage device storing insert information to be inserted; an information processing device owned by an information insertion demander and configured to output an information insertion request signal to request insertion of said insert information; and a communication network owned by a communication carrier, providing a communication service, and interconnecting an originating communication instrument held by an originating user of the communication service, a receiving communication instrument held by a receiving user of the communication service, said information storage device, and said information processing device,
said information insertion method being associated with insertion of the insert information, and comprising:
a request receiving step wherein said communication network receives an information insertion request sent from said information processing device or presented by said information insertion demander;
a settling step wherein said communication network settles insert information to be inserted, based on the information insertion request received;
an acquiring step wherein said communication network acquires the insert information settled, from said information storage device; and
an inserting step wherein said communication network inserts the insert information acquired, into said originating communication instrument and said receiving communication instrument.

12. The information insertion method according to Claim 11, wherein in said settling step, said communication network settles said insert information, based on originating user information about the originating user and receiving user information about the receiving user, in addition to said information insertion request.

13. The information insertion method according to Claim 11, wherein in said inserting step, said communication network inserts the insert information at a time set in a calling period of communication between the originating communication instrument and the receiving communication instrument, in a communication period, or at a time of an end of communication.

14. The information insertion method according to Claim 13, wherein in said inserting step, said communication network sets the insertion time in the calling period of communication, in the communication period, or at the time of the end of communication, based on originating user information about the originating user and receiving user information about the receiving user, and inserts the insert information at the set time.

15. The information insertion method according to Claim 11, wherein a form of said communication network is a mobile communication network, an Integrated Services Digital Network, a communication network for Personal Handyphone System, or an Internet network.

16. The information insertion method according to Claim 11, wherein said insert information is voice information, non-voice information, or integrated information of voice information and non-voice information.

17. The information insertion method according to Claim 11, wherein a communication system in said communication network is one of a circuit switching system, a packet switching system, and an IP communication system, or two or more thereof used in combination.

18. The information insertion method according to Claim 17, wherein when the communication system in said communication network is said two or more used in combination, a communication system used in said communication service and a communication system used in insertion of said insert information are independently set according to a type of said insert information.

19. The information insertion method according to Claim 11, further comprising:
a monitoring step wherein said communication network monitors whether an insertion process in said inserting step is carried out normally;
an abnormal event control step wherein when said insertion process is not carried out normally, said communication network performs such control as to execute a predetermined abnormal event process;
an achievement storing step wherein said communication network stores achievement information about insertion process conditions obtained as a result of the monitoring; and
a notifying step wherein said communication network notifies said information insertion demander of the achievement information stored or of billing information determined based on the achievement information.

20. The information insertion method according to Claim 11, wherein said information insertion demander is identical with said communication carrier.

21. A communication network constituting an information insertion service providing system together with an information storage device storing insert information to be inserted, and an information processing device owned by an information insertion demander and configured to output an information insertion request signal to request insertion of said insert information,
said communication network being owned by a communication carrier, providing a communication service, and interconnecting an originating communication instrument held by an originating user of the communication service, a receiving communication instrument held by a receiving user of the communication service, said information storage device, and said information processing device,
said communication network comprising:
request receiving means for receiving an information insertion request sent from said information processing device or presented by said information insertion demander;
settling means for settling insert information to be inserted, based on the information insertion request received;
acquiring means for acquiring the insert information settled, from said information storage device; and
inserting means for inserting the insert information acquired, into said originating communication instrument and said receiving communication instrument.

22. The communication network according to Claim 21, wherein said settling means settles said insert information, based on originating user information about the originating user and receiving user information about the receiving user, in addition to said information insertion request.

23. The communication network according to Claim 21, wherein said inserting means inserts the insert information at a time set in a calling period of communication between the originating communication instrument and the receiving communication instrument, in a communication period, or at a time of an end of communication.

24. The communication network according to Claim 23, wherein said inserting means sets the insertion time in the calling period of communication, in the communication period, or at the time of the end of communication, based on originating user information about the originating user and receiving user information about the receiving user, and inserts the insert information at the set time.

25. The communication network according to Claim 21, further comprising:
monitoring means for monitoring whether an insertion process by said inserting means is carried out normally;
abnormal event control means for performing such control as to execute a predetermined abnormal event process when said insertion process is not carried out normally;
achievement storage means for storing achievement information about insertion process conditions obtained as a result of the monitoring; and
notifying means for notifying said information insertion demander of the achievement information stored or of billing information determined based on the achievement information.

26. The communication network according to Claim 21, wherein said information insertion demander is identical with said communication carrier.

27. An information management apparatus provided in a communication network interconnecting an information storage device storing insert information to be inserted, an information processing device configured to output an information insertion request signal to request insertion of the insert information, an originating communication instrument held by an originating user of a communication service, and a receiving communication instrument held by a receiving user of the communication service, said information management apparatus being configured to control insertion of said insert information, and comprising:
request receiving means for receiving an information insertion request sent from said information processing device or presented by said information insertion demander;
settling means for settling insert information to be inserted, based on the information insertion request received;
acquiring means for acquiring the insert information settled, from said information storage device; and
inserting means for inserting the insert information acquired, into said originating communication instrument and said receiving communication instrument.

28. The information management apparatus according to Claim 27, wherein said settling means settles said insert information, based on originating user information about the originating user and receiving user information about the receiving user from a service control apparatus provided in said communication network, in addition to said information insertion request.

29. The information management apparatus according to Claim 27, further comprising:
monitoring means for monitoring whether an insertion process by said inserting means is carried out normally;
abnormal event instructing means for instructing a service control apparatus provided in said communication network, to execute a predetermined abnormal event billing process when said insertion process is not carried out normally;
achievement storage means for storing achievement information about insertion process conditions obtained as a result of the monitoring; and
notifying means for notifying said information insertion demander of the achievement information stored or of billing information determined based on the achievement information.

30. A service control apparatus provided in a communication network interconnecting an information storage device storing insert information to be inserted, an information processing device configured to output an information insertion request signal to request insertion of said insert information, an originating communication instrument held by an originating user of a communication service, and a receiving communication instrument held by a receiving user of the communication service, said service control apparatus being configured to manage originating user information about the originating user and receiving user information about the receiving user, and comprising:
user information storing means storing the originating user information and the receiving user information; and
user information providing means configured to acquire originating user information and receiving user information corresponding to identification information of an originating user and identification information of a receiving user notified of, from said user information storing means and provide the originating user information and receiving user information acquired, to an information management apparatus for controlling insertion of said insert information.

31. The service control apparatus according to Claim 30, further comprising billing control means for, when receiving an execution command of a predetermined abnormal event billing process from said information management apparatus, performing the predetermined abnormal event billing process according to the execution command.
